# EUROPEAN PATENT SPECIFICATION

(11) **EP 4 494 745 B1**
(45) Date of publication and mention of the grant of the patent: **02.09.2026**
(21) Application number: 22943363.6
(22) Date of filing: 11.07.2022
(51) Int. Cl.: B01D 53/78, B01D 53/62, B01D 53/96

(54) **CARBON DIOXIDE CAPTURE AND PURIFICATION METHOD AND SYSTEM**
VERFAHREN UND SYSTEM ZUR ABSCHEIDUNG UND REINIGUNG VON KOHLENDIOXID
PROCÉDÉ ET SYSTÈME DE CAPTURE ET DE PURIFICATION DE DIOXYDE DE CARBONE

(30) Priority: 25.05.2022 CN 202210577489
(43) Date of publication of application: 22.01.2025
(73) Proprietor: Xeca Turbo Technologies (beijing) Co., Ltd., Beijing 100012 (CN)
(72) Inventor: ZHAO, Tu, Beijing 102209 (CN); LV, Xijia, Beijing 102209 (CN); ZHANG, Hao, Beijing 102209 (CN)
(74) Representative: Murgitroyd & Company
(86) International application number: PCT/CN2022/104812
(87) International publication number: WO 2023/226172

(56) References cited:
- CN-A- 113 117 506
- CN-A- 113 578 025
- JP-A- 2008 100 211
- US-A1- 2017 326 497
- US-A1- 2019 085 472
- US-A1- 2022 118 406
- US-B1- 11 219 860

## Description

### TECHNICAL FIELD

The present invention relates to the field of carbon dioxide capture technologies, and in particular, to a method and a system for capturing and purifying carbon dioxide.

### BACKGROUND

Carbon dioxide (CO₂) is the main component of gas at room temperature, and a problem of global warming caused by the continuous increase in CO₂ emissions has gradually attracted people's attention. Carbon dioxide capture technologies have the effect of reducing CO₂ emissions and effectively reducing a concentration of CO₂ in the atmosphere, and therefore, the development of efficient carbon dioxide capture technologies have also gradually become a research hotspot for people.

At present, various carbon capture technologies at home and abroad are emerging in an endless stream, for example, Carbon Engineering (CE) Company develops an air direct capture process with KOH and Ca(OH)₂ as a core absorption solution. When this process is adopted, a KOH solution is used to absorb CO₂ in the air, so as to convert the KOH solution into a K₂CO₃ solution, and then a Ca(OH)₂ solution is used to regenerate the KOH solution. In a regeneration process, the Ca (OH)₂ solution forms CaCO₃ solids, and the CaCO₃ solids are calcined at high temperature to obtain CaO, and then the CaO reacts with H₂O to obtain the Ca(OH)₂ solution. In the above processes, an inorganic base with stable properties is used as an absorbent, and therefore, the above processes run stably and continuously, and the above processes may be applied on a large scale. However, the whole process flow is relatively long, during the calcination of the CaCO₃ solids, energy consumption of the regeneration process is relatively high, and there is a problem of secondary carbon emissions.

Electrolyzing a carbonate solution by using an electrolysis process may realize regeneration of an alkaline solution, and captured CO₂ is electrolyzed out of the carbonate solution, which to some extent replace the use of a Ca(OH)₂ solution for regeneration of an alkaline solution and a calcination process of CaCO₃ solids. However, when the carbonate solution entering an electrolytic cell contains unreacted hydroxide (OH⁻), the hydroxide discharges first during a process of an electrolysis until the OH⁻ is completely consumed, and then carbonate is further electrolyzed. Electrolyzing the carbonate to generate CO₂ is accomplished in the following two steps: converting the carbonate (CO₃²⁻) into bicarbonate (HCO₃⁻) first, and then electrolyzing the HCO₃⁻ to the CO₂. Therefore, when the carbonate solution entering the electrolytic cell do not contain OH⁻ but containing a certain amount of HCO₃⁻, power consumption of the electrolytic cell during the process of the electrolysis can be reduced to a certain extent. However, when CO₂ is captured by using an alkaline solution, especially when the air with a relatively low concentration of CO₂ is captured, using OH⁻ with a relatively high concentration may ensure a rate of capturing CO₂. Therefore, in order to obtain a relatively high rate of capturing CO₂, the absorbed carbonate solution usually contains a certain amount of OH⁻, so as to increase the power consumption of the electrolytic cell.

In addition, theoretically, gaseous CO₂ generated during an electrolysis carries about 30% of O₂, if a conventional CO₂ separation tower is used to separate O₂ and CO₂, under the premise of obtaining a product of liquid CO₂ with a relatively high purity, with the discharge of the O₂ through a top of the tower, a large amount of CO₂ is carried out, which cannot guarantee a recovery rate of CO₂ and reduces an overall capture rate of a system.

Therefore, researching and developing a method and a system for capturing and purifying carbon dioxide is of great significance for satisfying both a relatively high rate of capturing CO₂ and a relatively low energy consumption.

Patent application document No. US20170326497A1 provides a capture device for capturing a target gas from a gas flow, which can be continuously used without requiring consumption of target gas binding salts. To this end, the device is arranged to generate separate acidic and alkaline streams of fluid by electrolyzing water, binding the target gas to the hydroxide ions in the alkaline fluid stream or the hydronium ions in the acidic stream, and recombining the generated streams to release the bound target gas and regenerating part of the electrolyzed water for further electrolysis. Such a capture device may for instance be used in a gas purification system, e.g. an air purification system for controlling target gas levels in a confined space such as a vehicle cabin, domestic dwelling or office space, a target gas generation system or a target gas enrichment system, e.g. for creating target gas-rich air for horticultural purposes. A method for capturing target gas from a gas flow and optionally utilizing the captured target gas is also disclosed.

Patent application document No. US11219860B1 provides a method of scrubbing a gas, such as flue gas or exhaust gas, including carbon dioxide to deplete the gas of carbon dioxide (CO₂), the method including the steps of: scrubbing the gas in a scrubber (210) with a first alkaline, aqueous scrubbing liquid to dissolve carbon dioxide (CO₂) as hydrogen carbonate (HCO₃⁻) and/or as carbonate (CO₃²⁻) in the first alkaline, aqueous scrubbing liquid, thereby providing a first spent aqueous scrubbing liquid including hydrogen carbonate (HCO₃⁻) and/or carbonate (CO₃²⁻), the first spent aqueous scrubbing liquid having a pH from about 7 to about 9; feeding the first spent aqueous scrubbing liquid to an anode chamber of an electrolytic cell (310) including the anode chamber (313) and a cathode chamber (312) separated by a membrane (311); regenerating the first spent aqueous scrubbing liquid in the electrolytic cell (310) by electrolysis, the electrolysis increasing the pH of the first spent aqueous scrubbing liquid in the cathode chamber (312), the electrolysis further depleting the first spent aqueous scrubbing liquid of hydrogen carbonate (HCO₃⁻) and of carbonate (CO₃²⁻) in the anode chamber (313) by decreasing the pH, the regeneration further including generating gaseous hydrogen in the cathode chamber (312) and a gaseous mixture of oxygen and carbon dioxide (CO₂) in the anode chamber (313) by electrolysis; and withdrawing regenerated alkaline, aqueous scrubbing liquid from the cathode chamber (312) and re-circulating it to the scrubber (210); wherein: the gaseous hydrogen is withdrawn from the cathode chamber (312); and the gaseous mixture of oxygen and carbon dioxide is withdrawn from the anode chamber (313).

Patent Document No. US2022118406A1 discloses a system for scrubbing a flue gas.

### SUMMARY

Main purposes of the present invention are to provide a method and a system for capturing and purifying carbon dioxide, so as to solve problems in that a rate of capturing CO₂ is relatively low and energy consumption is relatively high during the existing process of capturing and purifying carbon dioxide.

In order to achieve the above purposes, an aspect of the present invention provides a method for capturing and purifying carbon dioxide, including a carbon dioxide capture, an electrolysis and a carbon dioxide separation. The method for capturing and purifying the carbon dioxide includes: performing a process of the carbon dioxide capture on a target component by using an alkaline solution to obtain an aqueous solution containing carbonate; detecting, by using a carbon dioxide detection device, a volume content of carbon dioxide in crude oxygen containing carbon dioxide, the carbon dioxide detection device being disposed in linkage with a valve disposed on a crude oxygen delivery pipeline and located downstream of the carbon dioxide detection device; in a case that the volume content of carbon dioxide in the crude oxygen containing carbon dioxide reaches a preset value, opening the valve; mixing at least a part of the aqueous solution containing carbonate with the crude oxygen containing carbon dioxide generated during a step of the carbon dioxide separation to obtain oxygen and an aqueous solution containing bicarbonate, a volume content of carbon dioxide in the crude oxygen containing carbon dioxide ranging from 9.7 vol% to 35.9 vol%; performing the electrolysis on the aqueous solution containing bicarbonate to obtain anode gas, hydrogen and a regenerated alkaline solution; and performing the step of the carbon dioxide separation on the anode gas to obtain liquid carbon dioxide and crude oxygen containing carbon dioxide, a content of carbon dioxide in the liquid carbon dioxide ranging from 98.5 vol% to 99.9999 vol%, and a content of carbon dioxide in the crude oxygen accounting for 5% to 40% of a content of carbon dioxide in the anode gas.

Further, the step of the carbon dioxide separation is performed in a carbon dioxide separation device, an operating pressure ranges from 10 bar to 60 bar, a mole reflux ratio ranges from 1.4: 1 to 4: 1, and a ratio of an amount of substance of gaseous phase extracts at a top of a tower to an amount of substance of feedstock fed to the tower ranges from 0.25: 1 to 0.45: 1.

Further, a temperature during a process of the electrolysis ranges from 50°C to 200°C, a voltage of an electrolytic cell ranges from 1.1 V to 4 V, a current density ranges from 500 A/m² to 8000 A/m², and in the aqueous solution containing bicarbonate, a ratio of an amount of substance of bicarbonate to a total amount of substance of carbonate and bicarbonate ranges from 0.1: 1 to 1: 1.

Further, before the step of the carbon dioxide separation, the method for capturing and purifying the carbon dioxide further includes: sequentially performing a cooling process, a gas-liquid separation process, a compression process, and a drying and dewatering process on the anode gas.

Further, after the cooling process, a temperature of the anode gas is reduced to between 5°C and 50°C.

Further, a concentration of hydroxide in the alkaline solution ranges from 0.2 mol/L to 3 mol/L, and in the aqueous solution containing carbonate, a concentration of carbonate ranges from 0.2 mol/L to 6 mol/L, a concentration of hydroxide ranges from 0 mol/L to 1.5 mol/L, and a pH value ranges from 10 to 14; and preferably, the concentration of the hydroxide in the alkaline solution ranges from 0.5 mol/L to 1.5 mol/L, and in the aqueous solution containing carbonate, the concentration of the carbonate ranges from 0.5 mol/L to 5.5 mol/L, and the concentration of the hydroxide ranges from 0 mol/L to 1 mol/L, and the pH value ranges from 12 to 14.

Further, the method for capturing and purifying the carbon dioxide further includes at least one of the following steps: returning at least a part of the aqueous solution containing carbonate to the process of the carbon dioxide capture for reuse; or returning the regenerated alkaline solution to the process of the carbon dioxide capture for reuse.

In order to achieve the above purposes, another aspect of the present invention further provides a system for capturing and purifying carbon dioxide. The system for capturing and purifying the carbon dioxide includes: a carbon dioxide capture device, an oxygen purification device, an electrolysis unit, a carbon dioxide separation device, a carbon dioxide detection device, and a valve. The carbon dioxide capture device is provided with an alkaline solution inlet, a target component inlet, and a discharging port for an aqueous solution containing carbonate; the oxygen purification device is provided with a crude oxygen inlet, an inlet for an aqueous solution containing carbonate, a discharging port for an aqueous solution containing bicarbonate, and an oxygen discharging port, and the inlet for an aqueous solution containing carbonate is in communication with the discharging port for an aqueous solution containing carbonate; the electrolysis unit is provided with an inlet for an aqueous solution containing bicarbonate, an anode gas discharging port, a hydrogen outlet, and a regenerated alkaline solution discharging port, and the inlet for an aqueous solution containing bicarbonate is in communication with the discharging port for an aqueous solution containing bicarbonate through a delivery pipeline for an aqueous solution containing bicarbonate; the carbon dioxide separation device is provided with an anode gas inlet, a liquid carbon dioxide outlet, and a crude oxygen outlet, the anode gas inlet is in communication with the anode gas discharging port through an anode gas delivery pipeline, and the crude oxygen outlet is in communication with the crude oxygen inlet through a crude oxygen delivery pipeline; the carbon dioxide detection device is configured to determine a content of carbon dioxide in the crude oxygen delivery pipeline; and the valve is disposed on the crude oxygen delivery pipeline and is located downstream of the carbon dioxide detection device, the valve is disposed in linkage with the carbon dioxide detection device, and is configured to open when the content of the carbon dioxide reaches a preset value.

Further, the carbon dioxide capture device is further provided with a reflux port, and the reflux port is disposed in communication with the regenerated alkaline solution discharging port and the discharging port for an aqueous solution containing carbonate, respectively.

Further, the reflux port is in communication with the regenerated alkaline solution discharging port through a regenerated alkaline solution delivery pipeline, and along a flow direction of a material, the system for capturing and purifying the carbon dioxide further includes a buffer tank and a first cooling device that are sequentially disposed on the regenerated alkaline solution delivery pipeline.

Further, the buffer tank is provided with an external supplemental water inlet for adjusting a concentration of a regenerated alkaline solution in the buffer tank.

Further, along a flow direction of a material in the anode gas delivery pipeline, the system for capturing and purifying the carbon dioxide further includes a second cooling device, a gas-liquid separation device, a compression device, and a drying and dewatering device that are sequentially disposed on the anode gas delivery pipeline.

Further, the system for capturing and purifying the carbon dioxide further includes a liquid flow regulation device at a bottom of a tower, and the liquid flow regulation device at the bottom of the tower is disposed on the delivery pipeline for an aqueous solution containing bicarbonate.

Further, the compression device includes a compressor with stages between 2 and 8, and a third cooling device and a liquid separation device are disposed between each stage of the compressor.

Further, a condenser and a re-boiler are further disposed inside the carbon dioxide separation device to adjust a content of carbon dioxide in the crude oxygen delivery pipeline.

The technical solutions of the present invention are applied, so that the carbon dioxide in the target component is converted into the aqueous solution containing carbonate during the process of the carbon dioxide capture, the carbon dioxide in the crude oxygen is absorbed by using the aqueous solution containing carbonate, so as to convert the aqueous solution containing carbonate into the aqueous solution containing bicarbonate, and then the process of the electrolysis is performed. Compared with a process of an electrolysis with carbonate as an electrolyte, the aqueous solution containing bicarbonate is used as an electrolyte in the present application, so that energy consumption during a process of an electrolysis can be effectively reduced. During the process of the carbon dioxide separation, a proportion of the content of the carbon dioxide in an obtained product of the crude oxygen to the content of the carbon dioxide in the anode gas, and a dry basis content of the oxygen and the carbon dioxide in the crude oxygen are defined within specific ranges, and the carbon dioxide herein is absorbed by the aqueous solution containing carbonate obtained during the process of the carbon dioxide capture, so that after the processes are implemented, liquid carbon dioxide with a high purity can be obtained, so as to maintain a recovery rate of carbon dioxide at a relatively high level, and a process cost during a process of capturing and purifying carbon dioxide is reduced, so as to increase its overall economic benefits.

### BRIEF DESCRIPTION OF THE DRAWINGS

The accompanying drawings, attached to the specification and forming a part of the present application, are configured to provide a further understanding of the present invention, and schematic embodiments of the present invention and the description thereof are configured to explain the present invention and do not constitute an improper limitation on the present invention. In the accompanying drawings:

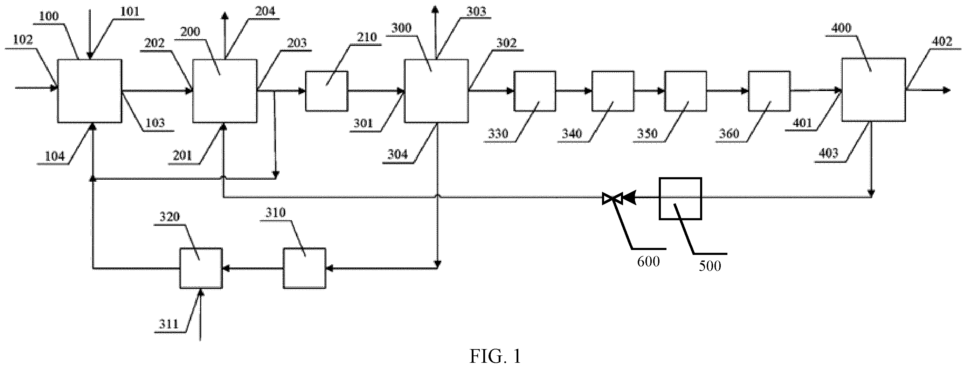

FIG. 1 is a schematic structural diagram of a system for capturing and purifying carbon dioxide according to an embodiment 1 of the present application.

The above accompanying drawings include the following reference numerals:
100. carbon dioxide capture device; 101. alkaline solution inlet; 102. target component inlet; 103. discharging port for an aqueous solution containing carbonate; and 104. reflux port;
200. oxygen purification device; 201. crude oxygen inlet; 202. inlet for an aqueous solution containing carbonate; 203. discharging port for an aqueous solution containing bicarbonate; 204. oxygen discharging port; and 210. liquid flow regulation device at a bottom of a tower;
300. electrolysis unit; 301. inlet for an aqueous solution containing bicarbonate; 302. anode gas discharging port; 303. hydrogen outlet; 304. regenerated alkaline solution discharging port; 310. buffer tank; 311. external supplemental water inlet; 320. first cooling device; 330. second cooling device; 340. gas-liquid separation device; 350. compression device; and 360. drying and dewatering device;
400. carbon dioxide separation device; 401. anode gas inlet; 402. liquid carbon dioxide outlet; and 403. crude oxygen outlet; and
500. carbon dioxide detection device.

### DETAILED DESCRIPTION OF THE EMBODIMENTS

It should be noted that the embodiments in the present application or features in the embodiments may be combined with each other without conflict. The present invention is described in detail below with reference to the embodiments.

As described in the background, during the existing process of capturing and utilizing carbon dioxide, in order to improve a yield of liquid carbon dioxide, it is usually necessary to increase a proportion of liquid carbon dioxide to anode gas as much as possible during a process of carbon dioxide separation, which results in a large amount of carbon dioxide in crude oxygen obtained after the carbon dioxide separation, and thus the carbon dioxide cannot be used effectively, thereby resulting in a low rate of capturing and utilizing carbon dioxide. In addition, energy consumption of the whole process is also relatively high. In order to solve the above technical problems, the present application provides a method for capturing and purifying carbon dioxide, including a carbon dioxide capture, an electrolysis and a carbon dioxide separation. The method for capturing and purifying the carbon dioxide includes: performing a process of the carbon dioxide capture on a target component by using an alkaline solution to obtain an aqueous solution containing carbonate; mixing at least a part of the aqueous solution containing carbonate with crude oxygen containing carbon dioxide generated during a step of the carbon dioxide separation to obtain oxygen and an aqueous solution containing bicarbonate, a volume content of carbon dioxide in the crude oxygen containing carbon dioxide ranging from 9.7 vol% to 35.9 vol%; performing the electrolysis on the aqueous solution containing bicarbonate to obtain anode gas, hydrogen and a regenerated alkaline solution; and performing the step of the carbon dioxide separation on the anode gas to obtain liquid carbon dioxide and crude oxygen containing carbon dioxide, a content of carbon dioxide in the liquid carbon dioxide ranging from 98.5 vol% to 99.9999 vol%, and a content of carbon dioxide in the crude oxygen accounting for 5% to 40% of a content of carbon dioxide in the anode gas.

The carbon dioxide in the target component is converted into the aqueous solution containing carbonate during the process of the carbon dioxide capture, the carbon dioxide in the crude oxygen is absorbed by using the aqueous solution containing carbonate, so as to convert the aqueous solution containing carbonate into the aqueous solution containing bicarbonate, and then the process of the electrolysis is performed. Compared with a process of an electrolysis with carbonate as an electrolyte, the aqueous solution containing bicarbonate is used as an electrolyte in the present application, so that energy consumption during a process of an electrolysis can be effectively reduced.

During the process of the carbon dioxide separation, a proportion of the content of the carbon dioxide in an obtained product of the crude oxygen to the content of the carbon dioxide in the anode gas, and the content of the oxygen and the carbon dioxide in the crude oxygen are defined within specific ranges, and the carbon dioxide herein is absorbed by the aqueous solution containing carbonate obtained during the process of carbon dioxide capture, so as to obtain the aqueous solution containing bicarbonate (CO₃²⁻+CO₂+H₂O→HCO₃⁻), so that after the processes are implemented, liquid carbon dioxide with a high purity can be obtained, so as to maintain a recovery rate of carbon dioxide at a relatively high level, and a process cost during a process of capturing and purifying carbon dioxide can be reduced, so as to increase its overall economic benefits .

In a preferred embodiment, the process of the carbon dioxide separation is performed in a carbon dioxide separation device, an operating pressure ranges from 10 bar to 60 bar, a mole reflux ratio ranges from 1.4: 1 to 4: 1, and a ratio of an amount of substance of gaseous phase extracts at a top of a tower to an amount of substance of feedstock ranges from 0.25: 1 to 0.45: 1. The operating pressure, the mole reflux ratio, and the ratio of the amount of substance of the gaseous phase extracts at the top of the tower to the amount of substance of the feedstock include but are not limited to the above ranges. Limiting the operating pressure, the mole reflux ratio, and the ratio of the amount of substance of the gaseous phase extracts at the top of the tower to the amount of substance of the feedstock within the above ranges can further improve efficiency of separating carbon dioxide and oxygen, and also improves a recovery rate of carbon dioxide during the whole process, thereby increasing economic benefits.

During the process of the electrolysis, a reaction of an anode is that carbonate ions in the aqueous solution containing bicarbonate discharge to generate the crude oxygen containing carbon dioxide, a reaction of a cathode is that water molecules gain electrons to generate the hydrogen, and reaction equations are as follows: HCO₃⁻→CO₂↑+O₂↑+H⁺ (the anode), and H₂O-H₂↑+OH⁻ (the cathode). The hydroxide ions generated at the cathode and metal ions in a system form the regenerated alkaline solution.

In a preferred embodiment, a temperature during a process of the electrolysis ranges from 50°C to 200°C, a voltage of an electrolytic cell ranges from 1.1 V to 4 V, a current density ranges from 500 A/m² to 8000 A/m², and in the aqueous solution containing bicarbonate, a ratio of an amount of substance of bicarbonate to a total amount of substance of carbonate and bicarbonate ranges from 0.1: 1 to 1: 1. The temperature during the process of the electrolysis, the voltage of the electrolytic cell, and the current density include but are not limited to the above ranges. Limiting the temperature during the process of the electrolysis, the voltage of the electrolytic cell, and the current density within the above ranges is beneficial for improving a rate of an electrochemical reaction and current efficiency, and is also beneficial for reducing energy consumption of an electrolytic cell, thereby reducing a process cost during a process of capturing and purifying carbon dioxide.

In a preferred embodiment, before the process of the carbon dioxide separation, the method for capturing and purifying the carbon dioxide further includes: sequentially performing a cooling process, a gas-liquid separation process, a compression process, and a drying and dewatering process on the anode gas. Adopting the above treatment methods for the anode gas in sequence is beneficial for providing a good prerequisite for a process of a subsequent carbon dioxide separation, which is convenient to perform the process of the carbon dioxide separation, thereby improving separation efficiency of carbon dioxide.

In a preferred embodiment, after the cooling process, a temperature of the anode gas is reduced to between 5°C and 50°C. The temperature of the anode gas includes but is not limited to the above range. Limiting the temperature of the anode gas within the above range is beneficial for improving effect of separating anode gas and water vapor during a process of a subsequent gas-liquid separation, and further improves efficiency of a subsequent carbon dioxide separation and a purity of products of liquid carbon dioxide.

In a preferred embodiment, condensed water and mixed gas containing oxygen, carbon dioxide and water vapor are obtained during the process of the gas-liquid separation, and a mole content of a dry basis of oxygen in the mixed gas ranges from 15% to 45%.

In a preferred embodiment - not part of the present invention - between the compression process and the gas-liquid separation process, the method for capturing and purifying the carbon dioxide further includes: performing heat exchange between the anode gas subjected to the compression process and the crude oxygen. Adopting the above heat exchange mode is beneficial for reducing a temperature of anode gas, and can also heat crude oxygen, so as to improve a rate of absorbing carbon dioxide during a purification process.

In an optional embodiment, a concentration of hydroxide in the alkaline solution ranges from 0.2 mol/L to 3 mol/L, and in the aqueous solution containing carbonate, a concentration of carbonate ranges from 0.2 mol/L to 6 mol/L, a concentration of hydroxide ranges from 0 mol/L to 1.5 mol/L, and a pH value ranges from 10 to 14. Compared with other ranges, limiting the concentration of the hydroxide in the alkaline solution within the above range is beneficial for improving efficiency of capturing carbon dioxide gas by an alkaline solution; and compared with other ranges, in the aqueous solution containing carbonate, limiting the concentration of the carbonate, the concentration of the hydroxide, and the pH value within the above ranges is beneficial for improving a content of bicarbonate in an aqueous solution containing bicarbonate obtained during a purification process, thereby facilitating providing a more sufficient source of an electrolyte for a process of an electrolysis, thus further facilitating reducing energy consumption.

Preferably, the concentration of the hydroxide in the alkaline solution ranges from 0.5 mol/L to 1.5 mol/L, and in the aqueous solution containing carbonate, the concentration of the carbonate ranges from 0.5 mol/L to 5.5 mol/L, the concentration of the hydroxide ranges from 0 mol/L to 1 mol/L, and the pH value ranges from 12 to 14. Compared with other ranges, limiting the concentration of the hydroxide in the alkaline solution within the above range is beneficial for further improving efficiency of capturing carbon dioxide by an alkaline solution; and compared with other ranges, in the aqueous solution containing carbonate, limiting the concentration of the carbonate, the concentration of the hydroxide, the ratio of the amount of substance of the bicarbonate to the total amount of substance of the carbonate and the bicarbonate, and the pH value within the above ranges, on the one hand, is beneficial for further improving efficiency of capturing carbon dioxide by an alkaline solution, and on the other hand, is also beneficial for further improving a content of bicarbonate in an aqueous solution containing bicarbonate obtained during a purification process, thereby further facilitating providing a more sufficient source of an electrolyte for a process of an electrolysis, thus still further facilitating reducing energy consumption.

In a preferred embodiment, the method for capturing and purifying the carbon dioxide further includes: returning at least a part of the aqueous solution containing carbonate and/or the regenerated alkaline solution to the process of the carbon dioxide capture for reuse. Adopting the above reuse method is beneficial for improving efficiency of capturing a target component during a process of a carbon dioxide capture, so as to facilitate improving a generation rate of an aqueous solution containing carbonate obtained after capture, and is also beneficial for further reducing a process cost.

A second aspect of the present application further provides a system for capturing and purifying carbon dioxide, and the system for capturing and purifying the carbon dioxide includes a carbon dioxide capture device 100, an oxygen purification device 200, an electrolysis unit 300, a carbon dioxide separation device 400, a carbon dioxide detection device 500, and a valve 600. The carbon dioxide capture device 100 is provided with an alkaline solution inlet 101, a target component inlet 102, and a discharging port 103 for an aqueous solution containing carbonate; the oxygen purification device 200 is provided with a crude oxygen inlet 201, an inlet 202 for an aqueous solution containing carbonate, a discharging port 203 for an aqueous solution containing bicarbonate, and an oxygen discharging port 204, and the inlet 202 for an aqueous solution containing carbonate is in communication with the discharging port 103 for an aqueous solution containing carbonate; the electrolysis unit 300 is provided with an inlet 301 for an aqueous solution containing bicarbonate, an anode gas discharging port 302, a hydrogen outlet 303, and a regenerated alkaline solution discharging port 304, and the inlet 301 for an aqueous solution containing bicarbonate is in communication with the discharging port 203 for an aqueous solution containing bicarbonate through a delivery pipeline for an aqueous solution containing bicarbonate; the carbon dioxide separation device 400 is provided with an anode gas inlet 401, a liquid carbon dioxide outlet 402, and a crude oxygen outlet 403, the anode gas inlet 401 is in communication with the anode gas discharging port 302 through an anode gas delivery pipeline, and the crude oxygen outlet 403 is in communication with the crude oxygen inlet 201 through a crude oxygen delivery pipeline; the carbon dioxide detection device 500 is configured to determine a content of carbon dioxide in the crude oxygen delivery pipeline; and the valve 600 is disposed on the crude oxygen delivery pipeline and is located downstream of the carbon dioxide detection device 500, the valve 600 is disposed in linkage with the carbon dioxide detection device 500, and when the content of the carbon dioxide reaches a preset value, the valve 600 is opened.

Carbon dioxide in a target component can be captured by an alkaline solution to obtain an aqueous solution containing carbonate, and the generated aqueous solution containing carbonate may be discharged through the discharging port 103 for an aqueous solution containing carbonate. The oxygen purification device 200 is provided with the crude oxygen inlet 201, crude oxygen containing carbon dioxide enters the oxygen purification device 200 through the crude oxygen inlet 201, so as to obtain oxygen, and the obtained oxygen is discharged through the oxygen discharging port 204, while the crude oxygen containing carbon dioxide reacts with a part of the aqueous solution containing carbonate to generate an aqueous solution containing bicarbonate, and the aqueous solution containing bicarbonate is discharged through the discharging port 203 for an aqueous solution containing bicarbonate. The above discharged aqueous solution containing bicarbonate is sent to the electrolysis unit 300 through the delivery pipeline for an aqueous solution containing bicarbonate and participates in a process of an electrolysis as an electrolyte, anode gas obtained after the electrolysis is discharged through the anode gas discharging port 302 and is sent to the anode gas inlet 401 through the anode gas delivery pipeline, hydrogen obtained after the electrolysis is discharged through the hydrogen outlet 303, and a regenerated alkaline solution obtained after the electrolysis is discharged through the regenerated alkaline solution discharging port 304. In order to detect the content of the carbon dioxide in products of the crude oxygen, the above system is further provided with the carbon dioxide detection device 500. The valve 600 is disposed at a specific position mentioned above, so that when the content of the carbon dioxide reaches the preset value, the valve 600 is opened, so as to allow the crude oxygen to enter the oxygen purification device 200 provided with the crude oxygen inlet 201.

The carbon dioxide in the target component can be converted into the aqueous solution containing carbonate by using the carbon dioxide capture device 100. The carbon dioxide in the crude oxygen is absorbed by the aqueous solution containing carbonate by using the oxygen purification device 200, so as to convert the aqueous solution containing carbonate into the aqueous solution containing bicarbonate, and then a process of an electrolysis is performed by using the electrolysis unit 300. Compared with a process of an electrolysis with carbonate as an electrolyte, during the process of the electrolysis performed in the electrolysis unit 300 of the present application, the aqueous solution containing bicarbonate is used as an electrolyte, so that energy consumption during a process of an electrolysis can be effectively reduced.

Disposal of the carbon dioxide detection device 500 and the valve 600 can limit the content of the carbon dioxide in the obtained products of the crude oxygen within the preset value, the carbon dioxide herein is absorbed by the aqueous solution containing carbonate obtained during the process of the carbon dioxide capture to obtain the aqueous solution containing bicarbonate (CO₃²⁻+CO₂+H₂O→HCO₃⁻), so that after the processes are implemented, liquid carbon dioxide with a high purity can be obtained, so as to maintain a recovery rate of carbon dioxide at a relatively high level, and a cost of a system for capturing and purifying carbon dioxide can be reduced, thereby increasing its overall economic benefits .

In a preferred embodiment, the carbon dioxide capture device 100 is further provided with a reflux port 104, and the reflux port 104 is disposed in communication with the regenerated alkaline solution discharging port 304 and the discharging port 103 for an aqueous solution containing carbonate, respectively. Adopting the above reflux port 104 is beneficial for improving a rate of absorbing a target component during a process of a carbon dioxide capture, so as to facilitate improving a generation rate of an aqueous solution containing carbonate after capture, and is also beneficial for further reducing a process cost.

In a preferred embodiment, the reflux port 104 is in communication with the regenerated alkaline solution discharging port 304 through a regenerated alkaline solution delivery pipeline, and along a flow direction of a material, the system for capturing and purifying the carbon dioxide further includes a buffer tank 310 and a first cooling device 320 that are sequentially disposed on the regenerated alkaline solution delivery pipeline. Disposal of the buffer tank 310 and the first cooling device 320 is beneficial for controlling changes in a pH value and a temperature of an alkaline solution within a relatively small fluctuation range, suppresses excessive fluctuations in physical and chemical properties of an alkaline solution caused by backflow of a regenerated alkaline solution, and is beneficial for improving a rate of absorbing carbon dioxide gas in the air by an alkaline solution, thereby facilitating improving a generation rate of carbonate in an aqueous solution containing carbonate.

In order to further suppress excessive fluctuations in physical and chemical properties of an alkaline solution caused by backflow of a regenerated alkaline solution, and further improve a rate of absorbing carbon dioxide gas in the air by an alkaline solution, in a preferred embodiment, the buffer tank 310 is provided with an external supplemental water inlet 311 for adjusting a concentration of a regenerated alkaline solution in the buffer tank 310.

In a preferred embodiment, along a flow direction of a material in the anode gas delivery pipeline, the system for capturing and purifying the carbon dioxide further includes a second cooling device 330, a gas-liquid separation device 340, a compression device 350, and a drying and dewatering device 360 that are sequentially disposed on the anode gas delivery pipeline. The second cooling device 330 is configured to perform a cooling treatment on anode gas, the gas-liquid separation device 340 is configured to perform a gas-liquid separation treatment on anode gas, the compression device 350 is configured to decrease a volume of anode gas, and the drying and dewatering device 360 is configured to perform drying on anode gas. Adopting the above treatments for anode gas in sequence is beneficial for providing a good prerequisite for a process of a subsequent carbon dioxide separation, which is convenient to perform the process of the carbon dioxide separation, thereby improving separation efficiency of carbon dioxide.

In a preferred embodiment - not part of the present invention - the system for capturing and purifying the carbon dioxide further includes a heat exchange device, and the heat exchange device is disposed on the anode gas delivery pipeline between the compression device 350 and the carbon dioxide separation device 400 for exchanging heat between anode gas and crude oxygen. Using the heat exchange device to exchange heat between the anode gas and the crude oxygen is beneficial for reducing a temperature of anode gas, and can also heat crude oxygen, so as to improve a rate of absorbing carbon dioxide during a purification process.

In a preferred embodiment, the system for capturing and purifying the carbon dioxide further includes a liquid flow regulation device 210 at a bottom of a tower, and the liquid flow regulation device 210 at the bottom of the tower is disposed on the delivery pipeline for an aqueous solution containing bicarbonate. Disposal of the liquid flow regulation device 210 at the bottom of the tower is beneficial for adjusting and controlling flow of an aqueous solution containing bicarbonate within an appropriate range, thereby facilitating controlling a process of an electrolysis in the electrolysis unit 300.

A pressure of anode gas can be increased gradually by using a compressor with multi-stages, and compared with a compressor with single-stage, an air force generated by the compressor with multi-stages is higher, and compression efficiency is also higher, so that the compressor with multi-stages is more suitable for large-scale operations and continuous applications. In a preferred embodiment, the compression device 350 includes a compressor with stages between 2 and 8, and a third cooling device and a liquid separation device are disposed between each stage of the compressor. An amount of stages of the compression device 350 includes but is not limited to the above range, and limiting the amount of stages of the compression device 350 within the above range is beneficial for improving a pressure of anode gas, and also reduces energy consumption. Disposing the third cooling device between each stage of the compressor is beneficial for liquefying compressed anode gas and generating more liquid carbon dioxide, and using the liquid separation device is beneficial for separating more liquefied liquid carbon dioxide.

In a preferred embodiment, a condenser and a re-boiler are further disposed inside the carbon dioxide separation device 400 to adjust a content of carbon dioxide in the crude oxygen delivery pipeline.

The present application may be further described in detail below with reference to the specific embodiments, and these embodiments cannot be interpreted to limit the protection scope of the present application.

It should be noted that, in the present application, the unit kWh/kgCO₂ represents: an amount of electricity (kWh) consumed by an electrolytic cell for every 1 kg of CO₂ produced during a process of an electrolysis; and a recovery rate of carbon dioxide refers to: a weight percentage of a weight of liquid carbon dioxide obtained during a process of a carbon dioxide separation to a total weight of carbon dioxide captured during a process of a carbon dioxide capture.

### Embodiment 1

In this embodiment, a target component is the air, an alkaline solution is a potassium hydroxide solution, and a concentration of hydroxide in the alkaline solution is 1 mol/L.

A method for capturing and purifying carbon dioxide includes the following content.

In a carbon dioxide capture device 100, carbon dioxide in the air is captured by using KOH solution, i.e., a process of a carbon dioxide capture is performed, so as to obtain an aqueous solution containing carbonate; the alkaline solution is sent into the carbon dioxide capture device 100 through an alkaline solution inlet 101, the air is sent into the carbon dioxide capture device 100 through a target component inlet 102, and in the obtained aqueous solution containing carbonate, a concentration of carbonate is 4.2 mol/L, a concentration of hydroxide is 0.8 mol/L, and a pH value is 13.8.

At least a part of the above aqueous solution containing carbonate is mixed with crude oxygen generated during a process of a carbon dioxide separation to obtain oxygen and an aqueous solution containing bicarbonate, and in the aqueous solution containing bicarbonate, a ratio of an amount of substance of bicarbonate to a total amount of substance of carbonate and bicarbonate is 0.2: 1.

A volume content of carbon dioxide in the crude oxygen containing carbon dioxide is 26.8 vol%; a content of carbon dioxide in the crude oxygen is determined by adopting a carbon dioxide detection device 500; and the aqueous solution containing bicarbonate above obtained is sent into an electrolysis unit 300 through a delivery pipeline for an aqueous solution containing bicarbonate, and flow of the aqueous solution containing bicarbonate is adjusted by using a liquid flow regulation device 210 at a bottom of a tower.

The aqueous solution containing bicarbonate above obtained is electrolyzed in the electrolysis unit 300, a temperature during a process of an electrolysis is set to 60°C, a voltage of an electrolytic cell is set to 4 V, a current density is set to 8000 A/m², and anode gas, hydrogen and a regenerated alkaline solution are obtained after the electrolysis; and the above regenerated alkaline solution is returned to the process of the carbon dioxide capture for reuse, the regenerated alkaline solution sequentially passes through a buffer tank 310 and a first cooling device 320 through a regenerated alkaline solution delivery pipeline, and water is sent into the buffer tank 310 through an external supplemental water inlet 311, so as to control a concentration of hydroxide in the alkaline solution to maintain 1 mol/L.

The anode gas is cooled by adopting a second cooling device 330, so that a temperature of the anode gas is reduced to 20°C, and then a gas-liquid separation treatment is performed on the cooled anode gas by adopting a gas-liquid separation device 340, so as to obtain condensed water and mixed gas containing oxygen, carbon dioxide and water vapor, and a mole content of a dry basis of oxygen in the mixed gas is 32.4 vol%; and a compression process is performed by adopting a compression device 350, the compression process is performed by using a compressor with 4 stages, a third cooling device and a liquid separation device are disposed between each stage of the compressor, and the processed anode gas is obtained after being processed by a drying and dewatering device 360.

The anode gas above processed is introduced into a carbon dioxide separation device 400 for a process of a carbon dioxide separation, an operating pressure is 30 bar, a mole reflux ratio is 4: 1, a ratio of an amount of substance of gaseous phase extracts at a top of a tower to an amount of substance of feedstock is 0.45: 1, and liquid carbon dioxide and crude oxygen containing carbon dioxide are obtained; a condenser and a re-boiler are further disposed inside the above carbon dioxide separation device 400; and heat exchange is performed between the anode gas and the crude oxygen in a heat exchange device.

According to testing, it was found that in this embodiment, a purity of liquid carbon dioxide is 99.9999 vol%, a content of carbon dioxide in crude oxygen accounts for 21% of a content of carbon dioxide in anode gas, a recovery rate of carbon dioxide is 99.62%, and power consumption of an electrolytic cell is 3.1 kWh/kgCO₂.

### Embodiment 2

Similar to the embodiment 1, the process of the carbon dioxide separation is performed in the carbon dioxide separation device 400. Differences from the embodiment 1 are that during the process of the carbon dioxide separation, an operating pressure is 60 bar, a mole reflux ratio is 1.4: 1, and a ratio of an amount of substance of gaseous phase extracts at a top of a tower to an amount of substance of feedstock is 0.25: 1.

At least a part of an aqueous solution containing carbonate is mixed with crude oxygen generated during the above process of the carbon dioxide separation, so as to obtain oxygen and an aqueous solution containing bicarbonate; and in the aqueous solution containing bicarbonate used in a process of an electrolysis, a ratio of an amount of substance of bicarbonate to a total amount of substance of carbonate and bicarbonate is 0.01: 1. According to testing, it was found that in this embodiment, a purity of liquid carbon dioxide is 96.0383 vol%, a content of carbon dioxide in crude oxygen accounts for 16% of a content of carbon dioxide in anode gas, a recovery rate of carbon dioxide is 99.99%, and power consumption of an electrolytic cell is 3.4 kWh/kgCO₂.

### Embodiment 3

Similar to the embodiment 1, the process of the carbon dioxide separation is performed in the carbon dioxide separation device 400. Differences from the embodiment 1 are that during the process of the carbon dioxide separation, an operating pressure is 60 bar, a mole reflux ratio is 5: 1, and a ratio of an amount of substance of gaseous phase extracts at a top of a tower to an amount of substance of feedstock is 0.5: 1.

At least a part of an aqueous solution containing carbonate is mixed with crude oxygen generated during the above process of the carbon dioxide separation, so as to obtain oxygen and an aqueous solution containing bicarbonate; and in the aqueous solution containing bicarbonate used in a process of an electrolysis, a ratio of an amount of substance of bicarbonate to a total amount of substance of carbonate and bicarbonate is 0.32: 1. According to testing, it was found that in this embodiment, a purity of liquid carbon dioxide is 99.9999 vol%, a content of carbon dioxide in crude oxygen accounts for 25.7% of a content of carbon dioxide in anode gas, a recovery rate of carbon dioxide is 90.61%, and power consumption of an electrolytic cell is 2.93 kWh/kgCO₂.

### Embodiment 4

Differences from the embodiment 1 are that a temperature during a process of an electrolysis is 95°C, a voltage of an electrolytic cell is 4 V, and a current density is 500 A/m².

According to testing, it was found that in this embodiment, a purity of liquid carbon dioxide is 99.9968 vol%, a recovery rate of carbon dioxide is 99.59%, and power consumption of an electrolytic cell is 3.12 kWh/kgCO₂.

### Embodiment 5

Differences from the embodiment 1 are that a temperature during a process of an electrolysis is 50°C.

According to testing, it was found that in this embodiment, a purity of liquid carbon dioxide is 99.9986 vol%, a recovery rate of carbon dioxide is 99.70%, and power consumption of an electrolytic cell is 3.16 kWh/kgCO₂.

### Embodiment 6

Differences from the embodiment 1 are that a temperature during a process of an electrolysis is 200°C.

According to testing, it was found that in this embodiment, a purity of liquid carbon dioxide is 99.9938 vol%, a recovery rate of carbon dioxide is 99.63%, and power consumption of an electrolytic cell is 3.18 kWh/kgCO₂.

### Embodiment 7

Differences from the embodiment 1 are that a temperature during a process of an electrolysis is 25°C, a voltage of an electrolytic cell is 0.6 V, and a current density is 300 A/m².

According to testing, it was found that in this embodiment, a purity of liquid carbon dioxide is 99.9971 vol%, and a recovery rate of carbon dioxide is 99.61%, and power consumption of an electrolytic cell is 3.72 kWh/kgCO₂.

### Embodiment 8

Differences from the embodiment 1 are that a concentration of hydroxide in an alkaline solution is 0.2 mol/L, and in an aqueous solution containing carbonate, a concentration of carbonate is 0.47 mol/L, a concentration of hydroxide is 0.03 mol/L, and a pH value is 12.1.

According to testing, it was found that in this embodiment, a purity of liquid carbon dioxide is 99.9856 vol%, a recovery rate of carbon dioxide is 99.66%, and power consumption of an electrolytic cell is 4.08 kWh/kgCO₂.

### Embodiment 9

Differences from the embodiment 1 are that a concentration of hydroxide in an alkaline solution is 3 mol/L, and in an aqueous solution containing carbonate, a concentration of carbonate is 6 mol/L, a concentration of hydroxide is 0.9 mol/L, and a pH value is 14.

According to testing, it was found that in this embodiment, a purity of liquid carbon dioxide is 99.9816 vol%, a recovery rate of carbon dioxide is 99.71%, and power consumption of an electrolytic cell is 3.96 kWh/kgCO₂.

### Embodiment 10

Differences from the embodiment 1 are that a concentration of hydroxide in an alkaline solution is 0.5 mol/L, and in an aqueous solution containing carbonate, a concentration of carbonate is 2.1 mol/L, a concentration of hydroxide is 0 mol/L, and a pH value is 14.

According to testing, it was found that in this embodiment, a purity of liquid carbon dioxide is 99.9905 vol%, a recovery rate of carbon dioxide is 99.55%, and power consumption of an electrolytic cell is 3.38 kWh/kgCO₂.

### Embodiment 11

Differences from the embodiment 1 are that a concentration of hydroxide in an alkaline solution is 1.5 mol/L, and in an aqueous solution containing carbonate, a concentration of carbonate is 4.5 mol/L, a concentration of hydroxide is 0.9 mol/L, and a pH value is 10.

According to testing, it was found that in this embodiment, a purity of liquid carbon dioxide is 99.9913 vol%, a recovery rate of carbon dioxide is 99.69%, and power consumption of an electrolytic cell is 3.98 kWh/kgCO₂.

### Embodiment 12

Differences from the embodiment 1 are that a concentration of hydroxide in an alkaline solution is 0.1 mol/L, and in an aqueous solution containing carbonate, a concentration of carbonate is 0.2 mol/L, a concentration of hydroxide is 0 mol/L, and a pH value is 10.9.

According to testing, it was found that in this embodiment, a purity of liquid carbon dioxide is 99.9953 vol%, a recovery rate of carbon dioxide is 99.66%, and power consumption of an electrolytic cell is 4.43 kWh/kgCO₂.

### Comparative Example 1

Differences from the embodiment 1 are that carbon dioxide in the air is captured by using an aqueous sodium hydroxide solution, so as to obtain an aqueous solution containing carbonate; in the aqueous solution containing carbonate, a ratio of an amount of substance of bicarbonate to a total amount of substance of carbonate and bicarbonate is 0: 1; and the aqueous solution containing carbonate is used as an electrolyte and is directly electrolyzed in an electrolytic cell, so as to obtain mixed gas containing oxygen and carbon dioxide.

According to testing, it was found that in this embodiment, a purity of liquid carbon dioxide is 66.6718 vol%, a recovery rate of carbon dioxide is 99.99%, and power consumption of an electrolytic cell is 3.43 kWh/kgCO₂.

The results of a recovery rate of carbon dioxide and power consumption of an electrolytic cell respectively measured in all the above embodiments and the above comparative example are summarized in Table 1.

**Table 1**

| | Recovery rate of CO₂ (%) | Purity of liquid CO₂ (vol%) | Power consumption of electrolytic cell (kWh/kgCO₂) |
|---|---|---|---|
| Embodiment 1 | 99.62 | 99.9999 | 3.10 |
| Embodiment 2 | 99.99 | 96.0383 | 3.40 |
| Embodiment 3 | 90.61 | 99.9999 | 2.93 |
| Embodiment 4 | 99.59 | 99.9968 | 3.12 |
| Embodiment 5 | 99.70 | 99.9986 | 3.16 |
| Embodiment 6 | 99.63 | 99.9938 | 3.18 |
| Embodiment 7 | 99.61 | 99.9971 | 3.72 |
| Embodiment 8 | 99.66 | 99.9856 | 4.08 |
| Embodiment 9 | 99.71 | 99.9816 | 3.96 |
| Embodiment 10 | 99.55 | 99.9905 | 3.38 |
| Embodiment 11 | 99.69 | 99.9913 | 3.98 |
| Embodiment 12 | 99.66 | 99.9953 | 4.43 |
| Comparative Example 1 | 99.99 | 66.6718 | 3.43 |

From the above description, it can be seen that in the above embodiments of the present invention, the following technical effects are achieved.

From a comparison of the embodiment 1 to the embodiment 3, it can be seen that during the process of the carbon dioxide separation, the operating pressure, the mole reflux ratio, and the ratio of the amount of substance of the gaseous phase extracts at the top of the tower to the amount of substance of the feedstock include but are not limited to the preferred ranges of the present application, and limiting the operating pressure, the mole reflux ratio, and the ratio of the amount of substance of the gaseous phase extracts at the top of the tower to the amount of substance of the feedstock within the above preferred ranges of the present application can further improve efficiency of separating carbon dioxide and oxygen, so as to improve a purity of liquid carbon dioxide, and disposal of an oxygen purification device may maintain a recovery rate of carbon dioxide during the whole process at a relatively high level, thereby increasing economic benefits.

From a comparison of the embodiment 1 to the embodiment 3 and the comparative example 1, it can be seen that the carbon dioxide in the air is converted into the aqueous solution containing carbonate during the process of the carbon dioxide capture, and the carbon dioxide in the crude oxygen is absorbed by using the aqueous solution containing carbonate, so as to convert the aqueous solution containing carbonate into the aqueous solution containing bicarbonate, and then the process of the electrolysis is performed. Compared with a process of an electrolysis with carbonate as an electrolyte, the aqueous solution containing bicarbonate is used as an electrolyte in the present application, so that energy consumption during a process of an electrolysis can be effectively reduced. During the process of the carbon dioxide separation, a proportion of a content of carbon dioxide in an obtained product of the crude oxygen to a content of carbon dioxide in the anode gas, and a dry basis content of oxygen and carbon dioxide in the crude oxygen are defined within a specific range, and the carbon dioxide herein is absorbed by the aqueous solution containing carbonate obtained during the process of the carbon dioxide capture, so as to obtain the aqueous solution containing bicarbonate, so that after the processes are implemented, liquid carbon dioxide with a high purity can be obtained, so as to maintain a recovery rate of carbon dioxide at a relatively high level, and a process cost during a process of capturing and purifying carbon dioxide can be reduced, so as to increase its overall economic benefits.

From a comparison of the embodiment 1, and the embodiment 4 to the embodiment 7, it can be seen that the temperature during the process of the electrolysis, the voltage of the electrolytic cell and the current density include but are not limited to the preferred ranges of the present application , and limiting the temperature during the process of the electrolysis, the voltage of the electrolytic cell and the current density within the preferred ranges of the present application is beneficial for improving a rate of an electrochemical reaction and current efficiency, and is also beneficial for reducing energy consumption of an electrolytic cell, thereby reducing a process cost during a process of capturing and purifying carbon dioxide.

From a comparison of the embodiment 1, the embodiment 8, the embodiment 9 and the embodiment 12, it can be seen that compared with other ranges, limiting the concentration of the hydroxide in the alkaline solution within the preferred range of the present application is beneficial for improving efficiency of capturing carbon dioxide gas in the air by an alkaline solution; and compared with other ranges, in the aqueous solution containing carbonate, limiting the concentration of the carbonate, the concentration of the hydroxide, and the pH value within the preferred ranges of the present application is beneficial for improving a content of bicarbonate in an aqueous solution containing bicarbonate obtained during a purification process, thereby facilitating providing a more sufficient source of an electrolyte for a process of an electrolysis, thus further facilitating reducing energy consumption.

From a comparison of the embodiment 1, the embodiment 10 and the embodiment 11, it can be seen that compared with other ranges, limiting the concentration of the hydroxide in the alkaline solution within the further preferred range of the present application is beneficial for further improving efficiency of capturing carbon dioxide gas by an alkaline solution; and compared with other ranges, in the aqueous solution containing carbonate, limiting the concentration of the carbonate, the concentration of the hydroxide, the ratio of the amount of substance of the bicarbonate to the total amount of substance of the carbonate and the bicarbonate, and the pH value within the further preferred ranges of the present application, on one hand, is beneficial for further improving a rate of capturing carbon dioxide by an alkaline solution, and on the other hand, is also beneficial for further improving a content of bicarbonate in an aqueous solution containing bicarbonate obtained during a purification process, thereby further facilitating providing a more sufficient source of an electrolyte for a process of an electrolysis, thus further facilitating reducing energy consumption.

It should be noted that the terms "first", "second", etc. in the specification and claims of the present application are intended to distinguish similar objects and do not necessarily need to be used to describe a specific order or sequence. It should be understood that the terms used in this way may be interchangeable in appropriate circumstances, so that the embodiments of the present application described herein can, for example, be implemented in an order other than those orders described herein.

## Claims

1. A method for capturing and purifying carbon dioxide, comprising a carbon dioxide capture, an electrolysis and a carbon dioxide separation, the method for capturing and purifying the carbon dioxide comprising:
performing a process of the carbon dioxide capture on a target component by using an alkaline solution to obtain an aqueous solution containing carbonate;
detecting, by using a carbon dioxide detection device (500), a volume content of carbon dioxide in crude oxygen containing carbon dioxide, the carbon dioxide detection device (500) being disposed in linkage with a valve (600) disposed on a crude oxygen delivery pipeline and located downstream of the carbon dioxide detection device (500);
in a case that the volume content of carbon dioxide in the crude oxygen containing carbon dioxide reaches a preset value, opening the valve (600);
mixing at least a part of the aqueous solution containing carbonate with the crude oxygen containing carbon dioxide generated during a step of the carbon dioxide separation to obtain oxygen and an aqueous solution containing bicarbonate, a volume content of carbon dioxide in the crude oxygen containing carbon dioxide ranging from 9.7 vol% to 35.9 vol%;
performing the electrolysis on the aqueous solution containing bicarbonate to obtain anode gas, hydrogen and a regenerated alkaline solution; and
performing the step of the carbon dioxide separation on the anode gas to obtain liquid carbon dioxide and crude oxygen containing carbon dioxide, a content of carbon dioxide in the liquid carbon dioxide ranging from 98.5 vol% to 99.9999 vol%, and a content of carbon dioxide in the crude oxygen accounting for 5% to 40% of a content of carbon dioxide in the anode gas.

2. The method for capturing and purifying the carbon dioxide according to claim 1, wherein the step of the carbon dioxide separation is performed in a carbon dioxide separation device, an operating pressure ranges from 10 bar to 60 bar, a mole reflux ratio ranges from 1.4: 1 to 4: 1, and a ratio of an amount of substance of gaseous phase extracts at a top of a tower to an amount of substance of feedstock fed to the tower ranges from 0.25: 1 to 0.45: 1.

3. The method for capturing and purifying the carbon dioxide according to claim 1 or 2, wherein a temperature during a process of the electrolysis ranges from 50°C to 200°C, a voltage of an electrolytic cell ranges from 1.1 V to 4 V, a current density ranges from 500 A/m² to 8000 A/m², and in the aqueous solution containing bicarbonate, a ratio of an amount of substance of bicarbonate to a total amount of substance of carbonate and bicarbonate ranges from 0.1: 1 to 1: 1.

4. The method for capturing and purifying the carbon dioxide according to claim 1, wherein before the step of the carbon dioxide separation, the method for capturing and purifying the carbon dioxide further comprises: sequentially performing a cooling process, a gas-liquid separation process, a compression process, and a drying and dewatering process on the anode gas.

5. The method for capturing and purifying the carbon dioxide according to claim 4, wherein after the cooling process, a temperature of the anode gas is reduced to between 5°C and 50°C.

6. The method for capturing and purifying the carbon dioxide according to claim 1, wherein a concentration of hydroxide in the alkaline solution ranges from 0.2 mol/L to 3 mol/L, and in the aqueous solution containing carbonate, a concentration of carbonate ranges from 0.2 mol/L to 6 mol/L, a concentration of hydroxide ranges from 0 mol/L to 1.5 mol/L, and a pH value ranges from 10 to 14; and
preferably, the concentration of the hydroxide in the alkaline solution ranges from 0.5 mol/L to 1.5 mol/L, and in the aqueous solution containing carbonate, the concentration of the carbonate ranges from 0.5 mol/L to 5.5 mol/L, the concentration of the hydroxide ranges from 0 mol/L to 1 mol/L, and the pH value ranges from 12 to 14.

7. The method for capturing and purifying the carbon dioxide according to claim 1, wherein the method for capturing and purifying the carbon dioxide further comprises at least one of the following steps:
returning at least a part of the aqueous solution containing carbonate to the process of the carbon dioxide capture for reuse; or
returning the regenerated alkaline solution to the process of the carbon dioxide capture for reuse.

8. A system for capturing and purifying carbon dioxide, wherein the system for capturing and purifying the carbon dioxide comprises:
a carbon dioxide capture device (100), provided with an alkaline solution inlet (101), a target component inlet (102), and a discharging port (103) for an aqueous solution containing carbonate;
an oxygen purification device (200), provided with a crude oxygen inlet (201), an inlet (202) for an aqueous solution containing carbonate, a discharging port (203) for an aqueous solution containing bicarbonate, and an oxygen discharging port (204), the inlet (202) for an aqueous solution containing carbonate being in communication with the discharging port (103) for an aqueous solution containing carbonate;
an electrolysis unit (300), provided with an inlet (301) for an aqueous solution containing bicarbonate, an anode gas discharging port (302), a hydrogen outlet (303), and a regenerated alkaline solution discharging port (304), and the inlet (301) for an aqueous solution containing bicarbonate being in communication with the discharging port (203) for an aqueous solution containing bicarbonate through a delivery pipeline for an aqueous solution containing bicarbonate;
a carbon dioxide separation device (400), provided with an anode gas inlet (401), a liquid carbon dioxide outlet (402), and a crude oxygen outlet (403), the anode gas inlet (401) being in communication with the anode gas discharging port (302) through an anode gas delivery pipeline, and the crude oxygen outlet (403) being in communication with the crude oxygen inlet (201) through a crude oxygen delivery pipeline;
a carbon dioxide detection device (500), configured to determine a content of carbon dioxide in the crude oxygen delivery pipeline; and
a valve (600), disposed on the crude oxygen delivery pipeline and located downstream of the carbon dioxide detection device (500), disposed in linkage with the carbon dioxide detection device (500), and configured to open when the content of the carbon dioxide reaches a preset value.

9. The system for capturing and purifying the carbon dioxide according to claim 8, wherein the carbon dioxide capture device (100) is further provided with a reflux port (104), and the reflux port (104) is disposed in communication with the regenerated alkaline solution discharging port (304) and the discharging port (103) for an aqueous solution containing carbonate, respectively.

10. The system for capturing and purifying the carbon dioxide according to claim 9, wherein the reflux port (104) is in communication with the regenerated alkaline solution discharging port (304) through a regenerated alkaline solution delivery pipeline, and along a flow direction of a material, the system for capturing and purifying the carbon dioxide further comprises a buffer tank (310) and a first cooling device (320) that are sequentially disposed on the regenerated alkaline solution delivery pipeline.

11. The system for capturing and purifying the carbon dioxide according to claim 10, wherein the buffer tank (310) is provided with an external supplemental water inlet (311) for adjusting a concentration of a regenerated alkaline solution in the buffer tank (310).

12. The system for capturing and purifying the carbon dioxide according to claim 8, wherein along a flow direction of a material in the anode gas delivery pipeline, the system for capturing and purifying the carbon dioxide further comprises a second cooling device (330), a gas-liquid separation device (340), a compression device (350), and a drying and dewatering device (360) that are sequentially disposed on the anode gas delivery pipeline.

13. The system for capturing and purifying the carbon dioxide according to claim 8, wherein the system for capturing and purifying the carbon dioxide further comprises a liquid flow regulation device (210) at a bottom of a tower, and the liquid flow regulation device (210) at the bottom of the tower is disposed on the delivery pipeline for an aqueous solution containing bicarbonate.

14. The system for capturing and purifying the carbon dioxide according to claim 12, wherein the compression device (350) includes a compressor with stages between 2 and 8, and a third cooling device and a liquid separation device are disposed between each stage of the compressor.

15. The system for capturing and purifying the carbon dioxide according to claim 8, wherein a condenser and a re-boiler are further disposed inside the carbon dioxide separation device (400) to adjust a content of carbon dioxide in the crude oxygen delivery pipeline.

## Patentansprüche

1. Ein Verfahren zum Abscheiden und Reinigen von Kohlendioxid, das eine Kohlendioxidabscheidung, eine Elektrolyse und eine Kohlendioxidtrennung beinhaltet, wobei das Verfahren zum Abscheiden und Reinigen des Kohlendioxids Folgendes beinhaltet:
Durchführen eines Prozesses der Kohlendioxidabscheidung an einer Zielkomponente unter Verwendung einer alkalischen Lösung, um eine carbonathaltige wässrige Lösung zu erhalten;
Detektieren, unter Verwendung einer Kohlendioxiddetektionsvorrichtung (500), eines Volumengehalts von Kohlendioxid in kohlendioxidhaltigem Rohsauerstoff, wobei die Kohlendioxiddetektionsvorrichtung (500) in Verbindung mit einem Ventil (600) angeordnet ist, das an einer Rohsauerstoffzufuhrleitung angeordnet ist und sich stromabwärts der Kohlendioxiddetektionsvorrichtung (500) befindet;
in einem Fall, dass der Volumengehalt von Kohlendioxid in dem kohlendioxidhaltigen Rohsauerstoff einen voreingestellten Wert erreicht, Öffnen des Ventils (600);
Mischen mindestens eines Teils der carbonathaltigen wässrigen Lösung mit dem kohlendioxidhaltigen Rohsauerstoff, der während eines Schritts der Kohlendioxidtrennung erzeugt wird, um Sauerstoff und eine bicarbonathaltige wässrige Lösung zu erhalten, wobei ein Volumengehalt von Kohlendioxid in dem kohlendioxidhaltigen Rohsauerstoff im Bereich von 9,7 Vol.-% bis 35,9 Vol.-% liegt;
Durchführen der Elektrolyse an der bicarbonathaltigen wässrigen Lösung, um Anodengas, Wasserstoff und eine regenerierte alkalische Lösung zu erhalten; und
Durchführen des Schritts der Kohlendioxidtrennung an dem Anodengas, um flüssiges Kohlendioxid und kohlendioxidhaltigen Rohsauerstoff zu erhalten, wobei ein Gehalt von Kohlendioxid in dem flüssigen Kohlendioxid im Bereich von 98,5 Vol.-% bis 99,9999 Vol.-% liegt und ein Gehalt von Kohlendioxid in dem Rohsauerstoff 5 % bis 40 % eines Gehalts von Kohlendioxid in dem Anodengas ausmacht.

2. Verfahren zum Abscheiden und Reinigen des Kohlendioxids gemäß Anspruch 1, wobei der Schritt der Kohlendioxidtrennung in einer Kohlendioxidtrennungsvorrichtung durchgeführt wird, ein Betriebsdruck im Bereich von 10 bar bis 60 bar liegt, ein Molrückflussverhältnis im Bereich von 1,4 : 1 bis 4 : 1 liegt und ein Verhältnis einer Substanzmenge von Gasphasenextrakten an einer Oberseite eines Turms zu einer Substanzmenge von Einsatzmaterial, das in den Turm eingespeist wird, im Bereich von 0,25 : 1 bis 0,45 : 1 liegt.

3. Verfahren zum Abscheiden und Reinigen des Kohlendioxids gemäß Anspruch 1 oder 2, wobei eine Temperatur während eines Prozesses der Elektrolyse im Bereich von 50 °C bis 200 °C liegt, eine Spannung einer Elektrolysezelle im Bereich von 1,1 V bis 4 V liegt, eine Stromdichte im Bereich von 500 A/m² bis 8000 A/m² liegt und in der bicarbonathaltigen wässrigen Lösung ein Verhältnis einer Substanzmenge von Bicarbonat zu einer Gesamtsubstanzmenge von Carbonat und Bicarbonat im Bereich von 0,1 : 1 bis 1 : 1 liegt.

4. Verfahren zum Abscheiden und Reinigen des Kohlendioxids gemäß Anspruch 1, wobei das Verfahren zum Abscheiden und Reinigen des Kohlendioxids vor dem Schritt der Kohlendioxidtrennung ferner Folgendes beinhaltet: sequenzielles Durchführen eines Kühlprozesses, eines Gas-Flüssigkeits-Trennprozesses, eines Kompressionsprozesses und eines Trocknungs- und Entwässerungsprozesses an dem Anodengas.

5. Verfahren zum Abscheiden und Reinigen des Kohlendioxids gemäß Anspruch 4, wobei nach dem Kühlprozess eine Temperatur des Anodengases auf zwischen 5 °C und 50 °C gesenkt ist.

6. Verfahren zum Abscheiden und Reinigen des Kohlendioxids gemäß Anspruch 1, wobei eine Konzentration von Hydroxid in der alkalischen Lösung im Bereich von 0,2 mol/l bis 3 mol/l liegt und in der carbonathaltigen wässrigen Lösung eine Konzentration von Carbonat im Bereich von 0,2 mol/l bis 6 mol/l liegt, eine Konzentration von Hydroxid im Bereich von 0 mol/l bis 1,5 mol/l liegt und ein pH-Wert im Bereich von 10 bis 14 liegt; und
vorzugsweise die Konzentration des Hydroxids in der alkalischen Lösung im Bereich von 0,5 mol/l bis 1,5 mol/l liegt und in der carbonathaltigen wässrigen Lösung die Konzentration des Carbonats im Bereich von 0,5 mol/l bis 5,5 mol/l liegt, die Konzentration des Hydroxids im Bereich von 0 mol/l bis 1 mol/l liegt und der pH-Wert im Bereich von 12 bis 14 liegt.

7. Verfahren zum Abscheiden und Reinigen des Kohlendioxids gemäß Anspruch 1, wobei das Verfahren zum Abscheiden und Reinigen des Kohlendioxids ferner mindestens einen der folgenden Schritte beinhaltet:
Zurückführen mindestens eines Teils der carbonathaltigen wässrigen Lösung in den Prozess der Kohlendioxidabscheidung zur Wiederverwendung; oder Zurückführen der regenerierten alkalischen Lösung in den Prozess der Kohlendioxidabscheidung zur Wiederverwendung.

8. Ein System zum Abscheiden und Reinigen von Kohlendioxid, wobei das System zum Abscheiden und Reinigen des Kohlendioxids Folgendes beinhaltet:
eine Kohlendioxidabscheidungsvorrichtung (100), die mit einem Einlass (101) für eine alkalische Lösung, einem Einlass (102) für eine Zielkomponente und einer Ablassöffnung (103) für eine carbonathaltige wässrige Lösung versehen ist;
eine Sauerstoffreinigungsvorrichtung (200), die mit einem Rohsauerstoffeinlass (201), einem Einlass (202) für eine carbonathaltige wässrige Lösung, einer Ablassöffnung (203) für eine bicarbonathaltige wässrige Lösung und einer Sauerstoffablassöffnung (204) versehen ist, wobei der Einlass (202) für eine carbonathaltige wässrige Lösung mit der Ablassöffnung (103) für eine carbonathaltige wässrige Lösung kommuniziert;
eine Elektrolyseeinheit (300), die mit einem Einlass (301) für eine bicarbonathaltige wässrige Lösung, einer Anodengasablassöffnung (302), einem Wasserstoffauslass (303) und einer Ablassöffnung (304) für regenerierte alkalische Lösung versehen ist, und wobei der Einlass (301) für eine bicarbonathaltige wässrige Lösung mit der Ablassöffnung (203) für eine bicarbonathaltige wässrige Lösung durch eine Zufuhrleitung für eine bicarbonathaltige wässrige Lösung kommuniziert;
eine Kohlendioxidtrennungsvorrichtung (400), die mit einem Anodengaseinlass (401), einem Auslass (402) für flüssiges Kohlendioxid und einem Rohsauerstoffauslass (403) versehen ist, wobei der Anodengaseinlass (401) mit der Anodengasablassöffnung (302) durch eine Anodengaszufuhrleitung kommuniziert und der Rohsauerstoffauslass (403) mit dem Rohsauerstoffeinlass (201) durch eine Rohsauerstoffzufuhrleitung kommuniziert;
eine Kohlendioxiddetektionsvorrichtung (500), die konfiguriert ist, um einen Gehalt von Kohlendioxid in der Rohsauerstoffzufuhrleitung zu bestimmen; und
ein Ventil (600), das an der Rohsauerstoffzufuhrleitung angeordnet ist und sich stromabwärts der Kohlendioxiddetektionsvorrichtung (500) befindet, in Verbindung mit der Kohlendioxiddetektionsvorrichtung (500) angeordnet ist und konfiguriert ist, um sich zu öffnen, wenn der Gehalt des Kohlendioxids einen voreingestellten Wert erreicht.

9. System zum Abscheiden und Reinigen des Kohlendioxids gemäß Anspruch 8, wobei die Kohlendioxidabscheidungsvorrichtung (100) ferner mit einer Rückflussöffnung (104) versehen ist und die Rückflussöffnung (104) in Kommunikation mit der Ablassöffnung (304) für regenerierte alkalische Lösung bzw. der Ablassöffnung (103) für eine carbonathaltige wässrige Lösung angeordnet ist.

10. System zum Abscheiden und Reinigen des Kohlendioxids gemäß Anspruch 9, wobei die Rückflussöffnung (104) durch eine Zufuhrleitung für regenerierte alkalische Lösung und entlang einer Durchflussrichtung eines Materials mit der Ablassöffnung (304) für regenerierte alkalische Lösung kommuniziert, wobei das System zum Abscheiden und Reinigen des Kohlendioxids ferner einen Puffertank (310) und eine erste Kühlvorrichtung (320) beinhaltet, die sequenziell an der Zufuhrleitung für regenerierte alkalische Lösung angeordnet sind.

11. System zum Abscheiden und Reinigen des Kohlendioxids gemäß Anspruch 10, wobei der Puffertank (310) mit einem Einlass (311) für externes Zusatzwasser zum Einstellen einer Konzentration einer regenerierten alkalischen Lösung in dem Puffertank (310) versehen ist.

12. System zum Abscheiden und Reinigen des Kohlendioxids gemäß Anspruch 8, wobei das System zum Abscheiden und Reinigen des Kohlendioxids entlang einer Durchflussrichtung eines Materials in der Anodengaszufuhrleitung ferner eine zweite Kühlvorrichtung (330), eine Gas-Flüssigkeits-Trennvorrichtung (340), eine Kompressionsvorrichtung (350) und eine Trocknungs- und Entwässerungsvorrichtung (360) beinhaltet, die sequenziell an der Anodengaszufuhrleitung angeordnet sind.

13. System zum Abscheiden und Reinigen des Kohlendioxids gemäß Anspruch 8, wobei das System zum Abscheiden und Reinigen des Kohlendioxids ferner eine Flüssigkeitsdurchflussregulierungsvorrichtung (210) an einem Boden eines Turms beinhaltet und die Flüssigkeitsdurchflussregulierungsvorrichtung (210) an dem Boden des Turms an der Zufuhrleitung für eine bicarbonathaltige wässrige Lösung angeordnet ist.

14. System zum Abscheiden und Reinigen des Kohlendioxids gemäß Anspruch 12, wobei die Kompressionsvorrichtung (350) einen Kompressor mit zwischen 2 und 8 Stufen umfasst und eine dritte Kühlvorrichtung und eine Flüssigkeitstrennvorrichtung zwischen jeder Stufe des Kompressors angeordnet sind.

15. System zum Abscheiden und Reinigen des Kohlendioxids gemäß Anspruch 8, wobei ferner ein Kondensator und ein Verdampfer innerhalb der Kohlendioxidtrennungsvorrichtung (400) angeordnet sind, um einen Gehalt von Kohlendioxid in der Rohsauerstoffzufuhrleitung einzustellen.

## Revendications

1. Un procédé pour capturer et purifier du dioxyde de carbone, comprenant une capture de dioxyde de carbone, une électrolyse et une séparation de dioxyde de carbone, le procédé pour capturer et purifier le dioxyde de carbone comprenant :
effectuer un processus de capture du dioxyde de carbone sur un composant cible en utilisant une solution alcaline afin d'obtenir une solution aqueuse contenant du carbonate ;
détecter, en utilisant un dispositif de détection de dioxyde de carbone (500), une teneur volumique en dioxyde de carbone dans de l'oxygène brut contenant du dioxyde de carbone, le dispositif de détection de dioxyde de carbone (500) étant disposé en liaison avec une vanne (600) disposée sur une conduite de distribution d'oxygène brut et située en aval du dispositif de détection de dioxyde de carbone (500) ;
dans un cas où la teneur volumique en dioxyde de carbone dans l'oxygène brut contenant du dioxyde de carbone atteint une valeur prédéfinie, ouvrir la vanne (600) ; mélanger au moins une partie de la solution aqueuse contenant du carbonate avec l'oxygène brut contenant du dioxyde de carbone généré pendant une étape de séparation du dioxyde de carbone afin d'obtenir de l'oxygène et une solution aqueuse contenant du bicarbonate, une teneur volumique en dioxyde de carbone dans l'oxygène brut contenant du dioxyde de carbone étant comprise dans un intervalle de 9,7 % en volume à 35,9 % en volume ;
effectuer l'électrolyse sur la solution aqueuse contenant du bicarbonate afin d'obtenir du gaz anodique, de l'hydrogène et une solution alcaline régénérée ; et
effectuer l'étape de séparation du dioxyde de carbone sur le gaz anodique afin d'obtenir du dioxyde de carbone liquide et de l'oxygène brut contenant du dioxyde de carbone, une teneur en dioxyde de carbone dans le dioxyde de carbone liquide étant comprise dans un intervalle de 98,5 % en volume à 99,9999 % en volume, et une teneur en dioxyde de carbone dans l'oxygène brut représentant 5 % à 40 % d'une teneur en dioxyde de carbone dans le gaz anodique.

2. Le procédé pour capturer et purifier le dioxyde de carbone selon la revendication 1, dans lequel l'étape de séparation du dioxyde de carbone est effectuée dans un dispositif de séparation de dioxyde de carbone, une pression de fonctionnement est comprise dans un intervalle de 10 bars à 60 bars, un rapport de reflux molaire est compris dans un intervalle de 1,4/1 à 4/1, et un rapport d'une quantité de substance d'extraits en phase gazeuse au sommet d'une tour à une quantité de substance de charge d'alimentation introduite dans la tour est compris dans un intervalle de 0,25/1 à 0,45/1.

3. Le procédé pour capturer et purifier le dioxyde de carbone selon la revendication 1 ou la revendication 2, dans lequel une température pendant un processus de l'électrolyse est comprise dans un intervalle de 50 °C à 200 °C, une tension d'une cellule électrolytique est comprise dans un intervalle de 1,1 V à 4 V, une densité de courant est comprise dans un intervalle de 500 A/m² à 8 000 A/m², et dans la solution aqueuse contenant du bicarbonate, un rapport d'une quantité de substance de bicarbonate à une quantité totale de substance de carbonate et de bicarbonate est compris dans un intervalle de 0,1/1 à 1/1.

4. Le procédé pour capturer et purifier le dioxyde de carbone selon la revendication 1, dans lequel avant l'étape de séparation du dioxyde de carbone, le procédé pour capturer et purifier le dioxyde de carbone comprend en outre : effectuer séquentiellement un processus de refroidissement, un processus de séparation gaz-liquide, un processus de compression, et un processus de séchage et de déshydratation sur le gaz anodique.

5. Le procédé pour capturer et purifier le dioxyde de carbone selon la revendication 4, dans lequel, après le processus de refroidissement, une température du gaz anodique est réduite pour être comprise entre 5 °C et 50 °C.

6. Le procédé pour capturer et purifier le dioxyde de carbone selon la revendication 1, dans lequel une concentration d'hydroxyde dans la solution alcaline est comprise dans un intervalle de 0,2 mol/L à 3 mol/L, et, dans la solution aqueuse contenant du carbonate, une concentration de carbonate est comprise dans un intervalle de 0,2 mol/L à 6 mol/L, une concentration d'hydroxyde est comprise dans un intervalle de 0 mol/L à 1,5 mol/L, et une valeur de pH est comprise dans un intervalle de 10 à 14 ; et de préférence, la concentration de l'hydroxyde dans la solution alcaline est comprise dans un intervalle de 0,5 mol/L à 1,5 mol/L, et dans la solution aqueuse contenant du carbonate, la concentration du carbonate est comprise dans un intervalle de 0,5 mol/L à 5,5 mol/L, la concentration de l'hydroxyde est comprise dans un intervalle de 0 mol/L à 1 mol/L, et la valeur de pH est comprise dans un intervalle de 12 à 14.

7. Le procédé pour capturer et purifier le dioxyde de carbone selon la revendication 1, le procédé pour capturer et purifier le dioxyde de carbone comprenant en outre au moins une des étapes suivantes :
renvoyer au moins une partie de la solution aqueuse contenant du carbonate au processus de capture du dioxyde de carbone pour réutilisation ; ou
renvoyer la solution alcaline régénérée au processus de capture du dioxyde de carbone pour réutilisation.

8. Un système pour capturer et purifier du dioxyde de carbone, le système pour capturer et purifier le dioxyde de carbone comprenant :
un dispositif de capture de dioxyde de carbone (100), pourvu d'une entrée de solution alcaline (101), d'une entrée de composant cible (102), et d'un orifice d'évacuation (103) pour une solution aqueuse contenant du carbonate ;
un dispositif de purification d'oxygène (200), pourvu d'une entrée d'oxygène brut (201), d'une entrée (202) pour une solution aqueuse contenant du carbonate, d'un orifice d'évacuation (203) pour une solution aqueuse contenant du bicarbonate, et d'un orifice d'évacuation d'oxygène (204), l'entrée (202) pour une solution aqueuse contenant du carbonate étant en communication avec l'orifice d'évacuation (103) pour une solution aqueuse contenant du carbonate ;
une unité d'électrolyse (300), pourvue d'une entrée (301) pour une solution aqueuse contenant du bicarbonate, d'un orifice d'évacuation de gaz anodique (302), d'une sortie d'hydrogène (303), et d'un orifice d'évacuation de solution alcaline régénérée (304), et l'entrée (301) pour une solution aqueuse contenant du bicarbonate étant en communication avec l'orifice d'évacuation (203) pour une solution aqueuse contenant du bicarbonate par l'intermédiaire d'une conduite de distribution pour une solution aqueuse contenant du bicarbonate ;
un dispositif de séparation de dioxyde de carbone (400), pourvu d'une entrée de gaz anodique (401), d'une sortie de dioxyde de carbone liquide (402), et d'une sortie d'oxygène brut (403), l'entrée de gaz anodique (401) étant en communication avec l'orifice d'évacuation de gaz anodique (302) par l'intermédiaire d'une conduite de distribution de gaz anodique, et la sortie d'oxygène brut (403) étant en communication avec l'entrée d'oxygène brut (201) par l'intermédiaire d'une conduite de distribution d'oxygène brut ;
un dispositif de détection de dioxyde de carbone (500), configuré pour déterminer une teneur en dioxyde de carbone dans la conduite de distribution d'oxygène brut ; et
une vanne (600), disposée sur la conduite de distribution d'oxygène brut et située en aval du dispositif de détection de dioxyde de carbone (500), disposée en liaison avec le dispositif de détection de dioxyde de carbone (500), et configurée pour s'ouvrir lorsque la teneur en dioxyde de carbone atteint une valeur prédéfinie.

9. Le système pour capturer et purifier le dioxyde de carbone selon la revendication 8, dans lequel le dispositif de capture de dioxyde de carbone (100) est en outre pourvu d'un orifice de reflux (104), et l'orifice de reflux (104) est disposé en communication avec l'orifice d'évacuation de solution alcaline régénérée (304) et l'orifice d'évacuation (103) pour une solution aqueuse contenant du carbonate, respectivement.

10. Le système pour capturer et purifier le dioxyde de carbone selon la revendication 9, dans lequel l'orifice de reflux (104) est en communication avec l'orifice d'évacuation de solution alcaline régénérée (304) par l'intermédiaire d'une conduite de distribution de solution alcaline régénérée, et le long d'une direction d'écoulement d'une matière, le système pour capturer et purifier le dioxyde de carbone comprend en outre un réservoir tampon (310) et un premier dispositif de refroidissement (320) qui sont disposés séquentiellement sur la conduite de distribution de solution alcaline régénérée.

11. Le système pour capturer et purifier le dioxyde de carbone selon la revendication 10, dans lequel le réservoir tampon (310) est pourvu d'une entrée d'eau d'appoint externe (311) pour régler une concentration d'une solution alcaline régénérée dans le réservoir tampon (310).

12. Le système pour capturer et purifier le dioxyde de carbone selon la revendication 8, le système pour capturer et purifier le dioxyde de carbone comprenant en outre, le long d'une direction d'écoulement d'une matière dans la conduite de distribution de gaz anodique, un deuxième dispositif de refroidissement (330), un dispositif de séparation gaz-liquide (340), un dispositif de compression (350), et un dispositif de séchage et de déshydratation (360) qui sont disposés séquentiellement sur la conduite de distribution de gaz anodique.

13. Le système pour capturer et purifier le dioxyde de carbone selon la revendication 8, le système pour capturer et purifier le dioxyde de carbone comprenant en outre un dispositif de régulation d'écoulement de liquide (210) au fond d'une tour, et le dispositif de régulation d'écoulement de liquide (210) au fond de la tour étant disposé sur la conduite de distribution pour une solution aqueuse contenant du bicarbonate.

14. Le système pour capturer et purifier le dioxyde de carbone selon la revendication 12, dans lequel le dispositif de compression (350) inclut un compresseur avec des étages compris entre 2 et 8, et un troisième dispositif de refroidissement et un dispositif de séparation de liquide sont disposés entre chaque étage du compresseur.

15. Le système pour capturer et purifier le dioxyde de carbone selon la revendication 8, dans lequel un condenseur et un rebouilleur sont en outre disposés à l'intérieur du dispositif de séparation de dioxyde de carbone (400) afin de régler une teneur en dioxyde de carbone dans la conduite de distribution d'oxygène brut.
